# EUROPEAN PATENT SPECIFICATION

(11) **EP 2 895 341 B1**
(45) Date of publication and mention of the grant of the patent: **02.01.2019**
(21) Application number: 13760111.8
(22) Date of filing: 10.09.2013
(51) Int. Cl.: B60D 1/52, B60D 1/54

(54) **TRIGGER ASSEMBLY AND DETACHABLE TOW BALL**
AUSLÖSERANORDNUNG UND ABNEHMBARER ANHÄNGERKUGELKOPF
ENSEMBLE À DÉCLENCHEMENT ET BOULE DE REMORQUAGE AMOVIBLE

(30) Priority: 11.09.2012 GB 201216154
(43) Date of publication of application: 22.07.2015
(73) Proprietor: C P Witter Limited, Deeside Industrial Park Deeside Flintshire CH5 2NY (GB)
(72) Inventor: EDWARDS, Jonathan, Oswestry Shropshire SY10 8HN (GB)
(74) Representative: Roberts, Peter David
(86) International application number: PCT/GB2013/052368
(87) International publication number: WO 2014/041343

(56) References cited:
- EP-A1- 1 829 716
- DE-B4- 4 345 619
- US-A1- 2004 113 391

## Description

The present invention relates to a trigger assembly of the kind that may be used, for example, to selectively restrain the shuttle of a detachable tow ball.

In some circumstances, attaching a traditional tow bar to a vehicle may be deemed undesirable. For instance, some drivers feel that the tow ball (to which a trailer, caravan or the like can be connected for towing) projecting from the back of their vehicle is unsightly or inconvenient when not in use. In such circumstances, a tow bar with a detachable tow ball may be preferable. As with traditional tow bars, a tow bar with a detachable tow ball requires a mounting assembly to be fitted to the vehicle. Unlike traditional tow bars however, the tow ball can be removed from the mounting assembly when not required, and re-attached when towing is to take place. This allows the rear of the vehicle to be returned to its original shape and appearance when desired.

An automatic detachable tow ball is a detachable tow ball that locks into place automatically when it is positioned correctly with respect to a mounting assembly of the tow bar. Most current automatic detachable tow balls utilise a coupling shaft on the tow ball, which is inserted into a collar on the mounting assembly of the tow bar. When the shaft is inserted into the collar a trigger mechanism on the shaft releases a sprung shuttle, usually in the form of an elongate bolt, which drives one or more coupling elements to project from the shaft into corresponding recesses in the collar, securing the tow ball to the mounting assembly. To detach the tow ball again, the sprung bolt is withdrawn, most commonly by rotating a knob connected to the bolt via a rack and pinion. This allows the coupling element(s) to be withdrawn back into the shaft, releasing the tow ball from the collar.

The trigger mechanisms of most presently available automatic detachable tow balls follow the same basic principle. Prior to release of the bolt, a latch member is positioned to lie partially in a bore in the bolt and partially in a bore of the housing of the shaft, preventing relative movement of the bolt and the housing. When the shaft of the tow ball is introduced into the collar of the mounting assembly the collar moves a latch release element, which disturbs the latch member, pressing it fully inside the bolt. This releases the bolt, which moves within the housing and deploys the coupling element(s). In an alternative arrangement, a lever on the outside of the housing is connected to a pin, which passes through a bore in the housing and into an aperture in the bolt. In this arrangement, insertion of the shaft into the collar pivots the lever outwards, which withdraws the pin from the bolt to release it.

One disadvantage of this trigger mechanism is that it is very easy to accidentally knock the latch release element before the shaft is fully inserted in the collar, especially since the user's view of the collar and the end of the shaft is usually obscured during insertion by vehicle bodywork and/or chassis components. Knocking the latch release element can prematurely trigger release of the bolt and deployment of the coupling element(s), preventing the shaft from being fully inserted into the collar. The user must then withdraw the tow ball shaft completely, retract the bolt and try again. In addition, triggering the tow ball causes the coupling element(s) and the knob by which the bolt is retracted to move suddenly and forcefully. If the tow ball is triggered partway through insertion of the shaft, which must usually be done by feel alone, there is a significant risk of injury to the user from the unexpected movement of the coupling element(s) and knob.

As explained previously, detaching the tow ball of most current detachable tow bars involves withdrawing the sprung bolt by rotating a retraction knob. To avoid the tow ball being removed by thieves intent on stealing the vehicle being towed, it is commonplace to include a lock mechanism on the knob. The plunger of the lock projects from the knob into the casing, preventing relative rotation therebetween. Unfortunately, such a lock mechanism has not entirely prevented unauthorised removal of the tow ball, as the lock can be overcome by force (for instance by pushing the vehicle over a curb), urging the knob to rotate and retracting the bolt.

US2004/0113391 describes a retractile trailer hitch has a tube shaft fixed on a motor vehicle frame and an arm having a tubular inner end pivotal on the shaft and an outer ball end. The arm is limitedly axially displaceable on the shaft between locked and unlocked positions. Formations on the frame and on the inner end angularly arrest the arm in its end positions in the locked position of the inner end. The formations are unengageable with each other in the unlocked position of the inner end. A bolt is axially displaceable inside the shaft between a holding position and a freeing position. Balls inside the inner end are coupled to the bolt for axially displacing the arm into the locked position on displacement of the bolt into the holding position and for displacing the arm axially into the unlocked position on displacement of the bolt into the freeing position.

It is one object of the present invention to mitigate or obviate one of the aforesaid disadvantages, and/or to provide an improved or alternative trigger assembly, detachable tow ball and/or tow bar assembly.

According to a first aspect of the present invention there is provided a trigger assembly for a coupling member, the trigger assembly comprising: a housing; a shuttle received within the housing and movable between a first position and a second position relative to the housing; one or more coupling elements movable between a stowed position and a deployed position, the coupling elements being movable to the deployed position under action of the shuttle moving to the second position; and a plurality of latch members distributed about the shuttle, each latch member being independently movable from an engaged configuration, in which the latch member retains the shuttle in the first position, to a released configuration, in which the latch member permits movement of the shuttle from the first position to the second position, and wherein each latch member is biased towards the engaged configuration.

Because the shuttle can be restrained by more than one latch member independently, releasing the shuttle to deploy the coupling element(s) requires all latch members to be disturbed simultaneously. This may make accidental triggering of the device much less likely, as the latch members can be positioned about the shuttle such that accidentally contacting the housing against another component is unlikely to disturb all the latch members at once. In addition, minimising the risk of accidental activation may also lift design constraints on the components near to which the housing must be moved, as the absence of surfaces that the housing may accidentally contact may be far less crucial.

The housing may take the form of a substantially cylindrical shaft for insertion into the collar of a complementary coupling member, may take the form of a hook for hooking onto a lug in a collar of a complementary coupling member, or may be of any other suitable shape. Where the housing takes the form of a substantially cylindrical shaft (or otherwise), the coupling element(s) may project from the housing substantially radially for receipt within the collar so as to prevent withdrawal of the shaft from the collar. Where the housing is in the form of a hook (or otherwise), the coupling element(s) may project beyond the tip of the housing for receipt within the complementary coupling member so as to prevent the housing being unhooked from the lug.

The shuttle may be received fully within the housing, or may be received in a groove or recess in the housing. The shuttle may project from the housing. One or more of the coupling elements may be integral to the shuttle and/or the housing.

The shuttle may be biased towards the second position. Instead or in addition, each latch member may be biased towards the engaged configuration. The shuttle and/or one or more of the latch members may be biased by a resilient element such as a coil spring, gas spring or elastomeric tube or block, by magnetic attraction/repulsion, or under action of a continuously-acting actuator. Alternatively, the shuttle and/or one or more latch members may be selectively movable manually, under gravity, or via a controllable actuator.

The shuttle may be slidably received within the housing. Instead or in addition, it may be pivotable and/or rotatable. Where the shuttle is slidably received within the housing, the shuttle may be an elongate bolt defining a longitudinal axis, the bolt being slidable along its longitudinal axis between the first and second positions. Alternatively, the bolt may be slidable along a different axis, such as an axis normal to its longitudinal axis. Instead or in addition, it may be pivotable and/or rotatable.

The trigger assembly may have two latch members. These may be positioned on opposite sides of the shuttle. For instance, they may be diametrically opposite. Alternatively the trigger assembly may have 3 or more latch members, which may be positioned on opposite sides of the shuttle, on the same side of the shuttle, or surrounding the shuttle in one or more evenly-spaced or irregularly-spaced annular arrays. The latch members may alternatively be distributed in one or more evenly-spaced or irregularly-spaced linear arrays running along the shuttle, in a combination of two or more of the above distributions, or in any other suitable distribution.

Each latch member may be received partially in a void in the shuttle and partially in a void in the housing when the latch member is in the engaged configuration, and fully received within the void in the shuttle when the latch member is in the released configuration. Instead, each latch member may be received partially in a void in the shuttle and partially in a void in the housing when the latch member is in the engaged configuration, but be fully retracted from the void in the shuttle when the latch member is in the released configuration. Alternatively, each latch member may operate in any other suitable fashion.

Each latch member may be substantially spherical. Alternatively, one, a plurality or all of the latch members may be substantially cylindrical (with flat ends, rounded ends or substantially hemispherical ends), cuboid, prismatic or ovoid, may take the form of an approximate (major or minor) circular sector, or may take any other suitable shape.

Each latch member may have a corresponding latch release element which, when the latch member is in the engaged configuration, lies adjacent to the latch member and projects from the housing such that disturbance of the latch release element moves the latch member from the engaged configuration to the released configuration. Instead, one or more of the latch members may themselves project from the housing, or be connected to an actuation mechanism and be movable via (selective or automatic) manipulation of the actuation mechanism. Where a latch release element is present it may be disturbed to move the latch member to the released configuration by being pressed into the housing, pulled away from the housing, moved along or across the housing, rotated or pivoted relative to the housing, by applying a magnetic force or electric current, or by applying any other suitable stimulus.

In an embodiment where such latch release elements are present, each latch release element is received within a corresponding void in the housing. Alternatively, they may be received within a peripheral component connected to the housing, or may be mounted externally on the housing.

In the above embodiment, where each latch member is received partially in a void in the shuttle and partially in a void in the housing when the latch member is in the engaged configuration, and fully received within the void in the shuttle when the latch member is in the released configuration, each latch release element may be received within the bore in the housing in which a portion of the corresponding latch member is received when said latch member is in the engaged configuration. One or more of the latch release elements may instead be received in separate bores to those which receive a portion of a latch member when the latch member is in the engaged configuration.

Each latch release element (where present) may be substantially spherical. Instead or in addition, the coupling elements may be substantially spherical. Alternatively, one or more of the latch release elements and/or coupling elements may be substantially cylindrical (with flat ends, rounded ends or substantially hemispherical ends), cuboid, prismatic or ovoid, may take the form of an approximate (major or minor) circular sector, or may take any other suitable shape.

The trigger assembly may have a single coupling element. Where the housing is in the form of a hook as outlined above (or otherwise), the single coupling element may be a flat-tipped wedge formed on an end of the shuttle, one face of the wedge being shaped to provide a camming action against a portion of a complementary coupling member so as to bias the housing towards the lug of the complementary coupling member onto which the housing is hookable.

The trigger assembly may have three coupling elements substantially evenly spaced in a planar array. Alternatively, it may have 2 coupling elements, or 4 or more coupling elements. These may be positioned (evenly or irregularly-spaced) in one or more planar arrays or annular arrays, or may be positioned in any other suitable distribution. Instead, the trigger assembly may have 3 coupling elements which are not substantially evenly spaced and/or are not in a planar array.

According to a second aspect of the invention there is provided a detachable tow ball comprising a trigger assembly according to the first aspect of the invention.

Such an arrangement may provide a detachable tow ball which exhibits one or more of the advantages discussed in relation to the first aspect of the invention.

According to a third aspect of the present invention there is provided a detachable tow ball comprising: a housing; a shuttle received within the housing and movable between a first position and a second position relative to the housing; one or move coupling elements movable between a stowed position and a deployed position, the coupling elements being movable to the deployed position under action of the shuttle moving to the second position; and a lock comprising a plunger which is movable between an obstructive position and a permissive position and is lockably securable in the obstructive position, the lock being positioned such that when the plunger is in the obstructive position with the shuttle in the second position, a portion of the plunger lies in the path of the shuttle thereby preventing movement of the shuttle to the first position.

Since the plunger of the lock projects into the path of the shuttle, the shuttle itself is prevented from moving when the plunger is in place. This may provide a stronger lock in comparison to arrangements where the plunger is positioned to prevent the operation of peripheral components by which the shuttle can be moved.

The plunger may be lockably securable only in the obstructive position, or may also be lockably securable in the permissive position. When the plunger is in the obstructive position the plunger may lie beyond the end of the shuttle (when the shuttle is in the second position), thereby preventing movement of the shuttle by abutting the leading portion of the shuttle. Alternatively, when the plunger is in the obstructive position the plunger may project into an aperture in the shuttle (when the shuttle is in the second position).

The plunger may be elongate and define a longitudinal axis, the plunger being movable from the permissive position to the obstructive position by moving it along its longitudinal axis from a retracted position to an extended position. Alternatively, the plunger may be movable between the obstructive and permissive positions by rotation. For instance, the plunger may have a notch or aperture which is aligned with the path of the shuttle when the plunger is in the permissive position so as to permit movement of the shuttle therethrough, and which is not aligned when the plunger is in the obstructive position so that the shuttle abuts the plunger and is prevented from moving. In an alternative arrangement, the plunger may have a protrusion which is rotatable into or out of the path of the shuttle.

According to a fourth aspect of the present invention there is provided a detachable tow ball according to the third aspect of the invention, incorporating a trigger assembly according to the first aspect of the invention.

Such an arrangement may provide a detachable tow ball which presents one or more of the advantages discussed in relation to the first aspect of the invention and/or the third aspect of the invention.

According to a fifth aspect of the present invention there is provided a tow bar assembly comprising a detachable tow ball according to any one of the second, third or fourth aspects of the invention.

The fifth aspect of the invention may provide a tow bar assembly which exhibits one or more of the advantages discussed in relation to the first, second, third or fourth aspects of the invention.

In an embodiment of a tow bar assembly according to the fifth aspect of the invention which comprises a detachable tow ball according to the second or fourth aspects of the invention, the tow bar comprises a collar with an actuation surface, the actuation surface being arranged to move all the latches to the released configuration when the trigger assembly of the detachable tow ball is inserted into the collar. The collar may be an open-ended tube, or may be partially or entirely closed at one end to form a receiver cup. Alternatively or in addition the collar may be a complete uninterrupted tube, or may be formed from multiple projections or may have voids, and/or or axial or circumferential slots or grooves. The collar may not be circular in (internal and/or external) cross section but may instead be square, hexagonal, octagonal or have any other suitable cross sectional shape.

The collar may have one or more voids configured to receive the coupling elements when the coupling elements are in the deployed position, thereby coupling the tow bar assembly and the collar. The voids may be entirely separate, or two or more may be joined together. For instance, all the voids may together form an annular groove.

Specific embodiments of the present invention will now be described, by way of example only, with reference to the accompanying drawings in which:
Figure 1 is a partially cross-sectional side view of a detachable tow ball according to an embodiment of the invention, and a collar;
Figure 2 is a close-up view of a trigger assembly and collar of the embodiment of figure 1; and
Figure 3 is a partially cross-sectional side view of part of the embodiment of figure 1, with a plunger of a lock shown in an obstructive position.

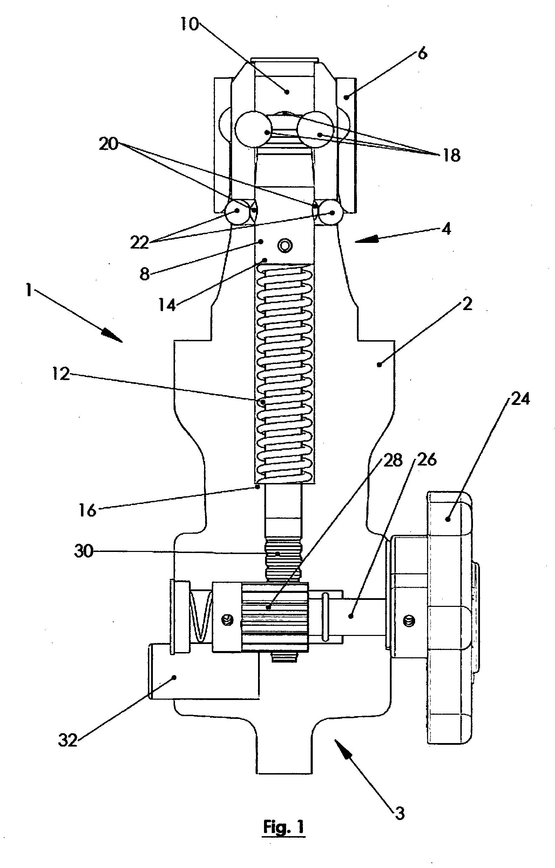

Referring now to figure 1 of the drawings, a detachable tow ball 1 according to an embodiment of the invention has a housing 2 with a base 3 and a shaft 4. In this embodiment the detachable tow ball 1 is an automatic detachable tow ball. The ball itself, the component to which trailers, caravans and the like can be coupled, is not visible in figure 1 but is connected to the base 3 of the housing by a ball arm (not visible).

The shaft 4 is shaped to be inserted into a collar 6 of a mounting assembly (not visible) attached to a tow bar on the rear of a vehicle. A shuttle in the form of an elongate bolt 8 is slidably received within a bore 10 in the housing 2. The bolt 8 is coaxial with the shaft 4 and is movable along the common longitudinal axis from a first position, the position shown in figure 1, to a second position in which from the perspective of figure 1 the bolt is axially higher up the bore 10 in the shaft 4 (i.e. the bolt is nearer the distal end of the shaft). The bolt 8 is biased towards the second position by a coil spring 12, held compressed between a shoulder 14 of the bolt 8 and a shoulder 16 of the bore 10 in the housing 2. The shaft 4 has three coupling elements 18, each of which is received in a bore (not visible) in the shaft 4. In addition, the shaft 4 has a pair of latch members 20, each on the opposite side of the bolt 8 (and the shaft) to the other and each being accompanied by a corresponding latch release element 22. These components, in combination with the bolt 8, form the trigger assembly of the detachable tow ball 1 and will be discussed in more detail below.

A knob 24, on the end of an axle 26 which extends in a direction perpendicular to the bolt, is connected to a toothed pinion 28. The pinion 28 is meshed with a toothed rack 30 on the bottom end of the bolt 8, so that rotation of the knob 24 causes linear motion of the bolt, and vice versa. A lock 32, as discussed in more detail later, is included within the base 3 of the housing 2.

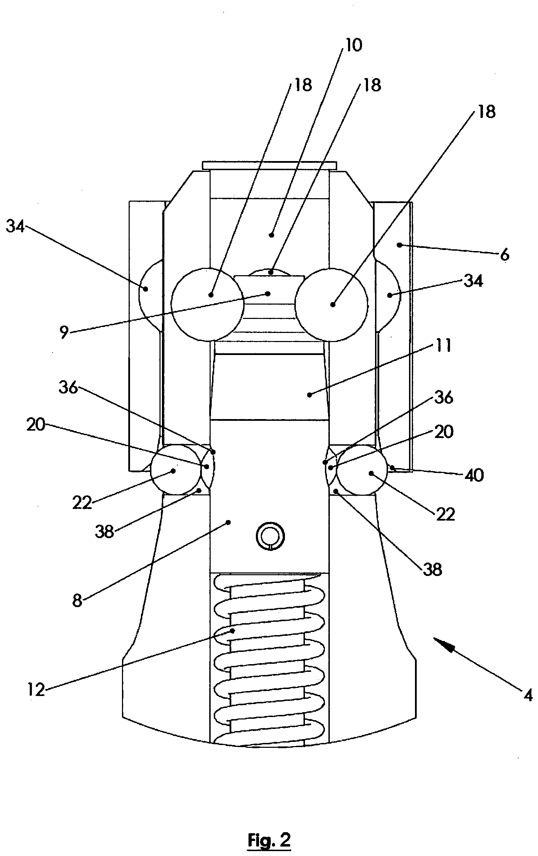

Figure 2 shows the collar 6 and the components of the trigger assembly in more detail. The three coupling elements 18, each of which is substantially spherical, lie in an annular array in a plane normal to the longitudinal axis of the shaft 4 and bolt 8. The coupling elements 18 are evenly spaced around the circumference of the bolt 8 (and indeed around the circumference of the shaft 4) at intervals of 120 degrees. The bolt 8 has a tapered tip 9, behind which is a frustro-conical section 11.

The coupling elements 18 are showed in a stowed position in figure 2. In the stowed position the coupling elements 18 lie flush with or beneath the outer surface of the shaft 4. The coupling elements 18 can be radially displaced, moving them from the stowed position to a deployed position in which they project from the outer surface of the shaft 4. The collar 6 has corresponding and complementary shaped recesses 34 for receiving a portion of the coupling elements 18 when the coupling elements are in the deployed position, allowing the shaft to interlock with the collar to connect the detachable tow ball 1 to a mounting assembly on a vehicle. The coupling elements 18 are movable to the deployed position by moving the bolt 8 to the second position, as outlined below.

The two latch members 20 are shown in an engaged configuration. Each latch member 20 is received partially in a radial bore 36 in the bolt and partially in a radial bore 38 in the shaft 4. In this embodiment, the two bores 36 in the bolt are joined and form a single through-bore. Each of the bores 38 in the shaft 4 additionally contains a latch release element 22, which abuts the corresponding latch member 20 and projects from the outer surface of the shaft 4. Each latch member 20 is movable to a released configuration by disturbing the corresponding latch release element 22 (in this case by depressing the latch release element, moving it towards the longitudinal axis of the shaft 4). When a latch element is in the engaged configuration, it being received partially in the shaft 4 and partially in the bolt 8, the bolt is prevented from moving within the shaft. When the latch member 20 is in the released configuration it is fully received within the bore 36 in the bolt 8, and therefore does not prevent axial motion of the bolt within the shaft 4. During such movement the bolt 8 carries the latch member 20 with it. Each latch member 20 is independently movable between the engaged and released configurations, as discussed below.

In this embodiment the latch members 20 and latch release elements 22 are substantially spherical, and in fact the latch members are substantially identical to the latch release elements. The latch members 20 are biased towards the engaged configuration. In this embodiment they are biased radially away from the longitudinal axis of the bolt 8, and indeed are biased away from one another, by a coil spring (not visible) held compressed in the bore 36 between the two latch members. A small lip (not visible) at the mouth of each bore 38 in the shaft 4 prevents the latch release elements 22 from being ejected from the shaft due to the latch members 20 being biased apart. As discussed below, the collar 6 has a frustro-conical actuation surface 40.

The function of the detachable tow ball 1 will now be described with reference to figures 1 and 2. As stated previously, when the latch members 20 are in the engaged configuration the bolt 8 is prevented from moving to the second position (under action of the spring 12) by each of the latch members independently, by virtue of each of them bridging the gap between the shaft 4 and bolt 8 and preventing relative movement therebetween. As the bolt 8 is retained by each of the latch members 20 independently, all latch members must be in the released configuration before the bolt can be moved to the second position to deploy the coupling elements 18. If only one of the latch members 20 (or only some of the latch members in embodiments with more than two of them) is moved to the released configuration, the bolt remains restrained by the remaining latch member(s). Because the latch members 20 are urged to the engaged configuration, they must all be held in the released configuration simultaneously to release the bolt 8. If the latch members 20 were not urged to the engaged configuration, the bolt 8 could be released by moving each latch member to the released configuration in turn. With the latch members 20 so urged, however, latch members previously moved to the released configuration move back to engaged configuration as soon as they are no longer held in the released configuration against their bias.

To connect the removable tow ball 1 to a mounting assembly (not visible), assuming the bolt 8 is in the first position, the shaft 4 is simply inserted into the collar 6. Conventionally, the collar 6 is positioned vertically so that the shaft 4 is inserted into it by moving the tow ball upwards from below the collar. When the shaft reaches the position shown in figures 1 and 2, the actuation surface 40 of the collar 6 contacts the latch release elements 22. As insertion of the shaft continues, the actuation surface 40 disturbs the latch release elements 22, camming them radially inwards. The latch release elements 22, in turn, force the latch members 20 radially inwards from the engaged configuration towards the released configuration. When all the latch members 20 reach the released configuration, that is to say when they are all received fully within the bores 36 in the bolt 8, the bolt is released and begins to move to the second position due to the force provided by the spring 12.

As the bolt 8 moves towards the second position, the sides of its tapered tip 9 cam the coupling elements 18 outwards, urging them from the stowed position to the deployed position. Each coupling element 18 is accommodated in a complementary recess 34 in the collar 6. The coupling elements 18 being received in complementary recesses 34 provides a centering action, as the sides of the recesses guide the coupling elements (and therefore the entire detachable tow ball 1) into position as they move outwards. When the coupling elements 18 reach the deployed position, the bolt 8 reaches the second position. The spring 12 continues to urge the bolt 8 towards the distal end of the shaft 4, but the bolt is prevented from moving beyond the second position due to its frustro-conical section 11 being held wedged between the coupling elements 18. The frustro-conical section 11 being wedged between the coupling elements 18 (and being urged further between them by the spring 12) also maintains a clamping force on the coupling elements, securing them in the deployed position. With the bolt 8 in the second position and the coupling elements 18 in the deployed position, the detachable tow ball 1 is interlocked with the collar 6 of the mounting assembly (not visible) and is therefore secured to the vehicle to which the mounting assembly is attached.

To remove the detachable tow ball 1, the knob 24 is rotated about the axle 26. This rotates the axle 26, and therefore the pinion 28. The pinion 28 is meshed with the rack 30 on the bolt 8, therefore as the pinion rotates the bolt is moved axially back to the first position against the bias of the spring 12. When the bolt 8 reaches the first position the bores 36, 38 are aligned so that the latch members 20, under action of the spring (not shown), return to the engaged configuration. They re-enter the bores 38 in the shaft 4, securing the bolt 8 in the first position. At this point, the knob 24 can be released by the user. The latch members 20 re-entering the bores 38 pushes the latch release elements 22 (which are no longer in contact with the actuation surface 40) outwards so that they project from the housing 2 once again. With the detachable tow ball 1 now reset, a disturbance of one of the latch release elements 22 during withdrawal of the shaft may move one of the latch members 20 to the released configuration but would not release the bolt, as explained above. Having moved the bolt 8 to the first position, the coupling elements 18 are no longer urged to the deployed position and so the shaft 4 may be withdrawn from the collar 6. As the shaft 4 is withdrawn, the recesses 34 cam the coupling projections 18 radially inwards and back to the stowed position.

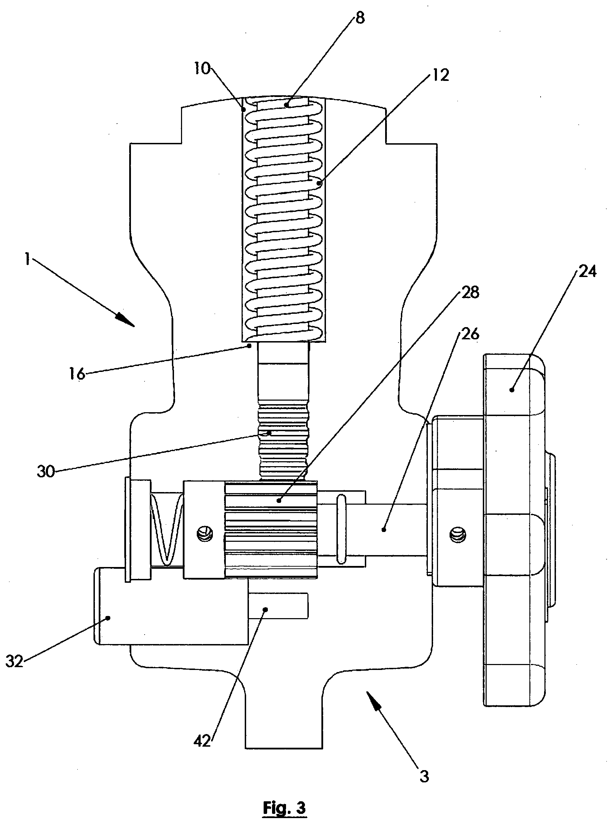

Turning now to figure 3, the detachable tow ball 1 of the embodiment is shown with the lock 32 arranged to prevent unauthorised removal. The lock 32 has a plunger 42, which is movable between an obstructive position and a permissive position. The plunger 42 is lockable in the obstructive position by use of a key (not visible). In this embodiment, the plunger 42 is elongate, with its obstructive position corresponding to an extended position (as shown in figure 3) and its permissive position corresponding to a retracted position (as shown in figure 1). With the lock being mounted on the base 3 and the plunger being extendable into the bore 10, when the plunger is in the obstructive (i.e. extended) position a portion of it lies across the path followed by the bolt 8 when the bolt moves from the second position to the first position. The bolt 8 itself is therefore restrained, in contrast with existing technology where it is the mechanism by which the bolt is moved that is restrained (most commonly the knob by which the bolt is retracted). This may provide a stronger lock, and/or one where no amount of damage to external components such as the knob 24 can circumnavigate the lock 23.

To utilise the lock 32, after the detachable tow ball 1 has been connected to a mounting assembly (not visible) as described above, the bolt 8 therefore being in the second position, the user inserts a key into the lock and rotates the key. This moves the plunger 42 from the permissive (retracted) position to the obstructive (extended) position. If a thief then tries to remove the detachable tow ball 1 by rotating the knob 24, the bolt 8 contacts the plunger 42 and is prevented from moving to the first position. Even if sufficient force is applied to the knob 24 so that it is forced to rotate, other components may be damaged (for instance the knob may detach from the axle 26) but the plunger 42 will remain in place, supported by the base 3, and the bolt 8 will not move.

When the user wishes to disconnect the detachable tow ball 1 he simply reinserts the key into the lock 32 and rotates it in the opposite direction. This withdraws the plunger 42, moving it to the permissive position, at which point the bolt 8 is free to be moved to the first position by rotating the knob 24.

It will be appreciated that numerous modifications to the above described design may be made without departing from the scope of the invention as defined by the appended claims. For instance, the spring which biases the bolt to the second position may be removed, resulting in the bolt being movable only via manipulation of the knob. This would provide a detachable tow ball rather than an automatic detachable tow ball.

The described and illustrated embodiment is to be considered as illustrative and not restrictive in character, it being understood that only a preferred embodiment has been shown and described and that all changes and modifications that come within the scope of the inventions as defined in the claims are desired to be protected. In relation to the claims, it is intended that when words such as "a," "an," "at least one," or "at least one portion" are used to preface a feature there is no intention to limit the claim to only one such feature unless specifically stated to the contrary in the claim. When the language "at least a portion" and/or "a portion" is used the item can include a portion and/or the entire item unless specifically stated to the contrary. In addition, use of the term 'void' is intended to refer to the absence of material in a particular area, and includes (though not exclusively) features such as blind bores, through-bores, recesses and gaps.

Optional and/or preferred features as set out herein may be used either individually or in combination with each other where appropriate in the combinations as set out in the accompanying claims. The optional and/or preferred features for each aspect of the invention set out herein are also applicable to any other aspects of the invention, where appropriate.

## Claims

1. A trigger assembly for a coupling member, the trigger assembly comprising:
a housing (2);
a shuttle received within the housing and movable between a first position and a second position relative to the housing;
one or more coupling elements (18) movable between a stowed position and a deployed position, the coupling elements being movable to the deployed position under action of the shuttle moving to the second position; and
a plurality of latch members (20) distributed about the shuttle, each latch member being independently movable from an engaged configuration, in which the latch member retains the shuttle in the first position, to a released configuration, in which the latch member permits movement of the shuttle from the first position to the second position, and wherein each latch member is biased towards the engaged configuration.

2. The trigger assembly according to claim 1 wherein the shuttle is biased towards the second position.

3. The trigger assembly according to any preceding claim wherein the shuttle is slidably received within the housing (2), and optionally, wherein the shuttle is an elongate bolt (8) defining a longitudinal axis, the bolt being slidable along its longitudinal axis between the first and second positions.

4. The trigger assembly according to any preceding claim wherein the trigger assembly has two latch members (20), and optionally, wherein the two latch members are positioned on opposite sides of the shuttle.

5. The trigger assembly according to any preceding claim wherein each latch member (20) is received partially in a void in the shuttle and partially in a void in the housing (2) when the latch member is in the engaged configuration, and is fully received within the void in the shuttle when the latch member is in the released configuration, and/or wherein each latch member is substantially spherical.

6. The trigger assembly according to any preceding claim wherein each latch member (20) has a corresponding latch release element (22) which, when the latch member is in the engaged configuration, lies adjacent to the latch member and projects from the housing (2) such that disturbance of the latch release element moves the latch member from the engaged configuration to the released configuration.

7. The trigger assembly according to claim 6 wherein each latch release element (22) is received within a corresponding void in the housing (2), and optionally, incorporating claim 5, wherein each latch release element is received within the bore in the housing in which a portion of the corresponding latch member is received when said latch member is in the engaged configuration.

8. The trigger assembly according to any one of claims 6 to 7 wherein each latch release element (22) is substantially spherical.

9. The trigger assembly according to any preceding claim wherein the coupling elements (18) are substantially spherical.

10. The trigger assembly according to any preceding claim wherein the trigger assembly has a single coupling element (18), or wherein the trigger assembly has three coupling elements (18) substantially evenly spaced in a planar array.

11. A detachable tow ball (1) comprising the trigger assembly according to any preceding claim.

12. A detachable tow ball (1) comprising:
a housing (2);
a shuttle received within the housing and movable between a first position and a second position relative to the housing;
one or move coupling elements (18) movable between a stowed position and a deployed position, the coupling elements being movable to the deployed position under action of the shuttle moving to the second position; and
a lock (32) comprising a plunger (42) which is movable between an obstructive position and a permissive position and is lockably securable in the obstructive position, the lock being positioned such that when the plunger is in the obstructive position with the shuttle in the second position, a portion of the plunger lies in the path of the shuttle thereby preventing movement of the shuttle to the first position.

13. A detachable tow ball (1) according to claim 12 wherein the plunger (42) is elongate and defines a longitudinal axis, the plunger being movable from the permissive position to the obstructive position by moving it along its longitudinal axis from a retracted position to an extended position, and/or incorporating the trigger assembly according to any one of claims 1-10.

14. A tow bar assembly comprising the detachable tow ball (1) according to any one of claims 11 - 13.

15. The tow bar assembly according to claim 14, incorporating claim 11 or 13, wherein the tow bar comprises a collar (6) with an actuation surface (40), the actuation surface being arranged to move all the latches to the released configuration when the trigger assembly of the detachable tow ball (1) is inserted into the collar, and optionally, wherein the collar has one or more voids (34) configured to receive the coupling elements (18) when the coupling elements are in the deployed position, thereby coupling the tow bar assembly and the collar.

## Patentansprüche

1. Auslöserbaugruppe für ein Kupplungsglied, wobei die Auslöserbaugruppe Folgendes umfasst:
ein Gehäuse (2),
ein Schiffchen, das innerhalb des Gehäuses aufgenommen wird und zwischen einer ersten Position und einer zweiten Position in Bezug auf das Gehäuse beweglich ist,
ein oder mehrere Kupplungselemente (18), die zwischen einer verstauten Position und einer entfalteten Position beweglich sind, wobei die Kupplungselemente unter der Wirkung des Schiffchens, dass sich zu der zweiten Position bewegt, zu der entfalteten Position beweglich sind, und
mehrere Klinkenelemente (20), die um das Schiffchen verteilt sind, wobei jedes Klinkenelement unabhängig von einer eingerückten Konfiguration, in der das Klinkenelement das Schiffchen in der ersten Position zurückhält, zu einer gelösten Konfiguration, in der das Klinkenelement eine Bewegung des Schiffchens von der ersten Position zu der zweiten Position ermöglicht, beweglich ist, und wobei jedes Klinkenelement zu der eingerückten Konfiguration hin vorgespannt wird.

2. Auslöserbaugruppe nach Anspruch 1, wobei das Schiffchen zu der zweiten Position hin vorgespannt wird.

3. Auslöserbaugruppe nach einem der vorhergehenden Ansprüche, wobei das Schiffchen verschiebbar innerhalb des Gehäuses (2) aufgenommen wird und wahlweise wobei das Schiffchen ein länglicher Bolzen (8) ist, der eine Längsachse definiert, wobei der Bolzen entlang seiner Längsachse zwischen der ersten und der zweiten Position verschiebbar ist.

4. Auslöserbaugruppe nach einem der vorhergehenden Ansprüche, wobei die Auslöserbaugruppe zwei Klinkenelemente (20) aufweist und wahlweise wobei die zwei Klinkenelemente auf gegenüberliegenden Seiten des Schiffchens angeordnet sind.

5. Auslöserbaugruppe nach einem der vorhergehenden Ansprüche, wobei jedes Klinkenelement (20) teilweise in einem Hohlraum in dem Schiffchen und teilweise in einem Hohlraum in dem Gehäuse (2) aufgenommen wird, wenn sich das Klinkenelement in der eingerückten Konfiguration befindet, und vollständig innerhalb des Hohlraums in dem Schiffchen aufgenommen wird, wenn sich das Klinkenelement in der gelösten Konfiguration befindet, und/oder wobei jedes Klinkenelement im Wesentlichen kugelförmig ist.

6. Auslöserbaugruppe nach einem der vorhergehenden Ansprüche, wobei jedes Klinkenelement (20) ein entsprechendes Klinkenfreigabeelement (22) aufweist, das, wenn sich das Klinkenelement in der eingerückten Konfiguration befindet, angrenzend an das Klinkenelement liegt und derart von dem Gehäuse (2) vorspringt, dass eine Störung des Klinkenfreigabeelements das Klinkenelement von der eingerückten Konfiguration zu der gelösten Konfiguration bewegt.

7. Auslöserbaugruppe nach Anspruch 6, wobei jedes Klinkenfreigabeelement (22) innerhalb eines entsprechenden Hohlraums in dem Gehäuse (2) aufgenommen wird und wahlweise, einschließlich von Anspruch 5, wobei jedes Klinkenfreigabeelement innerhalb der Bohrung in dem Gehäuse aufgenommen wird, in dem ein Abschnitt des entsprechenden Klinkenelements aufgenommen wird, wenn sich das Klinkenelement in der eingerückten Konfiguration befindet.

8. Auslöserbaugruppe nach einem der Ansprüche 6 bis 7, wobei jedes Klinkenfreigabeelement (22) im Wesentlichen kugelförmig ist.

9. Auslöserbaugruppe nach einem der vorhergehenden Ansprüche, wobei die Kupplungselemente (18) im Wesentlichen kugelförmig sind.

10. Auslöserbaugruppe nach einem der vorhergehenden Ansprüche, wobei die Auslöserbaugruppe ein einziges Kupplungselement (18) aufweist oder wobei die Auslöserbaugruppe drei Kupplungselemente (18) aufweist, die im Wesentlichen gleichmäßig in einer ebenen Gruppierung beabstandet sind.

11. Abnehmbarer Anhängerkugelkopf (1), der die Auslöserbaugruppe nach einem der vorhergehenden Ansprüche umfasst.

12. Abnehmbarer Anhängerkugelkopf (1), der Folgendes umfasst:
ein Gehäuse (2),
ein Schiffchen, das innerhalb des Gehäuses aufgenommen wird und zwischen einer ersten Position und einer zweiten Position in Bezug auf das Gehäuse beweglich ist,
ein oder mehrere Kupplungselemente (18), die zwischen einer verstauten Position und einer entfalteten Position beweglich sind, wobei die Kupplungselemente unter der Wirkung des Schiffchens, dass sich zu der zweiten Position bewegt zu der entfalteten Position beweglich sind, und
eine Verriegelung (32), die einen Kolben (42) umfasst, der zwischen einer sperrenden Position und einer freigebenden Position beweglich ist und verriegelbar in der sperrenden Position sicherbar ist, wobei die Verriegelung derart positioniert ist, dass, wenn sich der Kolben in der sperrenden Position befindet, mit dem Schiffchen in der zweiten Position, ein Abschnitt des Kolbens in der Bahn des Schiffchens liegt, wodurch eine Bewegung des Schiffchens zu der ersten Position verhindert wird.

13. Abnehmbarer Anhängerkugelkopf (1) nach Anspruch 12, wobei der Kolben (42) länglich ist und eine Längsachse definiert, wobei der Kolben durch Bewegen entlang seiner Längsachse von einer eingezogenen Position zu einer ausgefahrenen Position von der freigebenden Position zu der sperrenden Position beweglich ist, und/oder der die Auslöserbaugruppe nach einem der Ansprüche 1 bis 10 einschließt.

14. Anhängerkupplungsbaugruppe, die den abnehmbaren Anhängerkugelkopf (1) nach einem der Ansprüche 11 bis 13 umfasst.

15. Anhängerkupplungsbaugruppe nach Anspruch 14, einschließlich von Ansprüchen 11 oder 13, wobei die Anhängerkupplung einen Bund (6) mit einer Betätigungsfläche (40) umfasst, wobei die Betätigungsfläche dafür angeordnet ist, alle Klinken zu der gelösten Konfiguration zu bewegen, wenn die Auslöserbaugruppe des abnehmbaren Anhängerkugelkopfes (1) in den Bund eingeführt wird, und wahlweise wobei der Bund einen oder mehrere Hohlräume (34) aufweist, die dafür konfiguriert sind, die Kupplungselemente (18) aufzunehmen, wenn sich die Kupplungselemente in der entfalteten Position befinden, wodurch die Anhängerkupplungsbaugruppe und der Bund gekoppelt werden.

## Revendications

1. Ensemble de déclenchement pour un élément de couplage, l'ensemble de déclenchement comprenant :
un logement (2) ;
une navette reçue dans le logement et pouvant se déplacer entre une première position et une deuxième position par rapport au logement ;
un ou plusieurs éléments de couplage (18) pouvant se déplacer entre une position repliée et une position déployée, les éléments de couplage pouvant se déplacer vers la position déployée sous l'action du déplacement de la navette vers la deuxième position ; et
plusieurs éléments de verrouillage (20) distribués autour de la navette, chaque élément de verrouillage pouvant se déplacer de manière indépendante d'une configuration engagée, dans laquelle l'élément de verrouillage retient la navette dans la première position, vers une configuration dégagée, dans laquelle l'élément de verrouillage permet le déplacement de la navette de la première position vers la deuxième position, et dans lequel chaque élément de verrouillage est sollicité vers la configuration engagée.

2. Ensemble de déclenchement selon la revendication 1, dans lequel la navette est sollicitée vers la deuxième position.

3. Ensemble de déclenchement selon l'une quelconque des revendications précédentes, dans lequel la navette est reçue de manière coulissante dans le logement (2), et dans lequel la navette est optionnellement constituée par un boulon allongé (8) définissant un axe longitudinal, le boulon pouvant glisser le long de son axe longitudinal entre des première et deuxième positions.

4. Ensemble de déclenchement selon l'une quelconque des revendications précédentes, dans lequel l'ensemble de déclenchement comporte deux éléments de verrouillage (20), et dans lequel les deux éléments de verrouillage sont optionnellement positionnés sur des côtés opposés de la navette.

5. Ensemble de déclenchement selon l'une quelconque des revendications précédentes, dans lequel chaque élément de verrouillage (20) est reçu en partie dans un vide dans la navette et en partie dans un vide dans le logement (2) lorsque l'élément de verrouillage se trouve dans la configuration engagée, et est complètement reçu dans le vide dans la navette lorsque l'élément de verrouillage se trouve dans la configuration dégagée, et/ou dans lequel chaque élément de verrouillage est sensiblement sphérique.

6. Ensemble de déclenchement selon l'une quelconque des revendications précédentes, dans lequel chaque élément de verrouillage (20) comporte un élément de libération de verrouillage correspondant (22), qui, lorsque l'élément de verrouillage se trouve dans la configuration engagée, se situe près de l'élément de verrouillage et déborde du logement (2), de sorte qu'une perturbation de l'élément de libération du verrouillage déplace l'élément de verrouillage de la configuration engagée vers la configuration dégagée.

7. Ensemble de déclenchement selon la revendication 6, dans lequel chaque élément de libération du verrouillage (22) est reçu dans un vide correspondant dans le logement (2), et dans lequel, incorporant la revendication 5, chaque élément de dégagement du verrouillage est optionnellement reçu dans l'alésage dans le logement, dans lequel est reçue une partie de l'élément de verrouillage correspondant lorsque ledit élément de verrouillage se trouve dans la configuration engagée.

8. Ensemble de déclenchement selon l'une quelconque des revendications 6 à 7, dans lequel chaque élément de libération du verrouillage (22) et sensiblement sphérique.

9. Ensemble de déclenchement selon l'une quelconque des revendications précédentes, dans lequel les éléments de couplage (18) sont sensiblement sphériques.

10. Ensemble de déclenchement selon l'une quelconque des revendications précédentes, dans lequel l'ensemble de déclenchement comporte un seul élément de couplage (18), ou dans lequel l'ensemble de déclenchement comporte trois éléments de couplage (18) espacés de manière sensiblement régulière dans un agencement plan.

11. Boule de remorquage détachable (1), comprenant l'ensemble de déclenchement selon l'une quelconque des revendications précédentes.

12. Boule de remorquage détachable (1), comprenant :
un logement (2) ;
une navette reçue dans le logement et pouvant se déplacer entre une première position et une deuxième position par rapport au logement ;
un ou plusieurs éléments de couplage (18) pouvant se déplacer entre une position repliée et une position déployée, les éléments de couplage pouvant se déplacer vers la position déployée sous l'action du déplacement de la navette vers la deuxième position ; et
une serrure (32) comprenant un piston (42) pouvant être déplacé entre une position obstruée et une position permissive, et pouvant être fixé par verrouillage dans la position obstructive, la serrure étant positionnée de sorte que lorsque le piston se trouve dans la position obstructive, la navette se trouvant dans la deuxième position, une partie du piston se situe dans le trajet de la navette, empêchant ainsi le déplacement de la navette vers la première position.

13. Boule de remorquage détachable (1) selon la revendication 12, dans laquelle le piston (42) est allongé et définit un axe longitudinal, le piston pouvant être déplacé de la position permissive vers la position obstructive en le déplaçant le long de son axe longitudinal, d'une position rétractée vers une position étendue, et/ou incorporant l'ensemble de déclenchement selon l'une quelconque des revendications 1 à 10.

14. Ensemble de barre de remorquage, comprenant la boule de remorquage détachable (1) selon l'une quelconque des revendications 11 à 13.

15. Ensemble de barre de remorquage selon la revendication 14, incorporant les revendications 11 ou 13, dans lequel la barre de remorquage comprend un collier (6) avec une surface d'actionnement (40), la surface d'actionnement étant agencée de sorte à déplacer tous les éléments de verrouillage vers la configuration dégagée lorsque l'ensemble de déclenchement de la boule de remorquage détachable (1) est inséré dans le collier, et dans lequel le collier comporte optionnellement un ou plusieurs vides (34) configurés pour recevoir les éléments de couplage (18) lorsque les éléments de couplage se trouvent dans la position déployée, assurant ainsi le couplage de l'ensemble de barre de remorquage et du collier.
